# EUROPEAN PATENT SPECIFICATION

(11) **EP 0 567 479 B1**
(45) Date of publication and mention of the grant of the patent: **26.04.1995**
(21) Application number: 92901862.0
(22) Date of filing: 09.01.1992
(51) Int. Cl.: B62B 15/00

(54) **TRANSPORTATION DEVICE**
TRANSPORT VORRICHTUNG
DISPOSITIF DE TRANSPORT

(30) Priority: 14.01.1991 FI 910182
(43) Date of publication of application: 03.11.1993
(73) Proprietor: MARKKINOINTIKONSULTIT A. & O. KÄRKKÄINEN, SF-74170 Soinlahti (FI)
(72) Inventor: KÄRKKÄINEN, Aulis, SF-74700 Kiuruvesi (FI); KÄRKKÄINEN, Olavi, SF-74170 Soinlahti (FI)
(74) Representative: Siebmanns, Hubertus
(86) International application number: FI9200006
(87) International publication number: WO9212036

(56) References cited:
- CH-A- 623 525
- DE-A- 2 246 164
- FR-A- 2 653 098
- US-A- 4 561 664

## Description

The object of the invention is a device of transportation which consists of a cover made of elastic fabric material with filling material placed inside it.

There are many different kinds of sledges, toboggans, sliders, cushions or other kinds of device on which one can sit or lie when sliding downhill. The structure of these downhill sliding devices is usually rigid and when they are to be used, the lower part of one's back is constantly exposed to the hard bumps caused by the uneven contours of the downhill slope. In most devices there is no place to place one's feet so that one has to support them in an awkward position and in addition, they may be painfully jarred on the bumps as one goes downhill. The CH-patent 568 878 describes an existing sliding device which has been filled with a rubbery material. This kind of material is slightly elastic but it does not mould to the form of the user. In the device described in the GB-patent 1 541 134, foamy plastic has been used as a padding which does not significantly give way. In the solutions described in the CH-patent 623 525 and the EP-patent application 57 410, air in the intervening space acts as a padding. However, this structure is not durable. One disadvantage is the fact that the present devices are usually only suitable for sliding downhill or being pulled through the snow in winter time but they cannot be used during the summer.

The aim of the invention is to describe a transportation device where the above mentioned disadvantages can be avoided. In particular, one aim of the invention is to describe such a transportation device which would mould to the form of the user and smooth the ride down the hill. Besides, the aim of the invention is to describe a transportation device which has a simple structure and economical manufacturing costs and which can be used both in summer and winter.

The aim of the invention is achieved with the transportation device characterized in the following claims.

In the transportation device described in this invention, the filling material is granular-like material which, at least partially, is free to move inside the device and mould to the form of the user. Several granular-like substances can be used as materials which are suitable for this purpose. Styrox chips are especially suitable as the filling material but also other granular-like materials can be used. The transportation device will be filled in such a way that the granular-like material is not tightly packed. In this way the filling material will give way when the user sits down on top of the transportation device and it will take the shape of the user. On sliding downhill, the filling material will be shaped according to the contours of the terrain and the shape of the user, following effectively the surface of the ground and minimizing bumps due to the unevenness of the ground. The transportation device described in this invention does not weigh much and it is light to carry or be pulled.

The cover of the device of transportation consists favourably of a bottom part and a top part which are fastened to each other by their edges. Both the bottom part and the top part have been made, for example, of plastic coated fabric, both parts can be made of the same material. When the cover is watertight and the filling material is a buoyant, granular-like material, the transportation device can also be used in summer, for instance, on a water slide, for water exercises, water-skiing or as a sunbathing and swimming mattress.

According to the invention, the bottom part and the top part of the transportation device have been favourably joined to each other by at least one dividing wall. In this way, the granular-like material cannot slide to one end of the device but will always be evenly distributed inside it. The size of these transportation devices may vary; so-called one or two users' devices can be made or the devices can be constructed for even more people.

It has been found useful to place feet support on both sides of the transportation device, running length-wise along the device. These supports and the underside of the cover of the device form three sliding surfaces on which the transportation device slides.

In the following, the invention will be explained in more detail by referring to the attached drawing in which
fig. 1 shows an elevated back view of an application of the transportation device according to the invention, and
fig. 2 shows an elevated side view of another application of the device of transportation according to the invention.

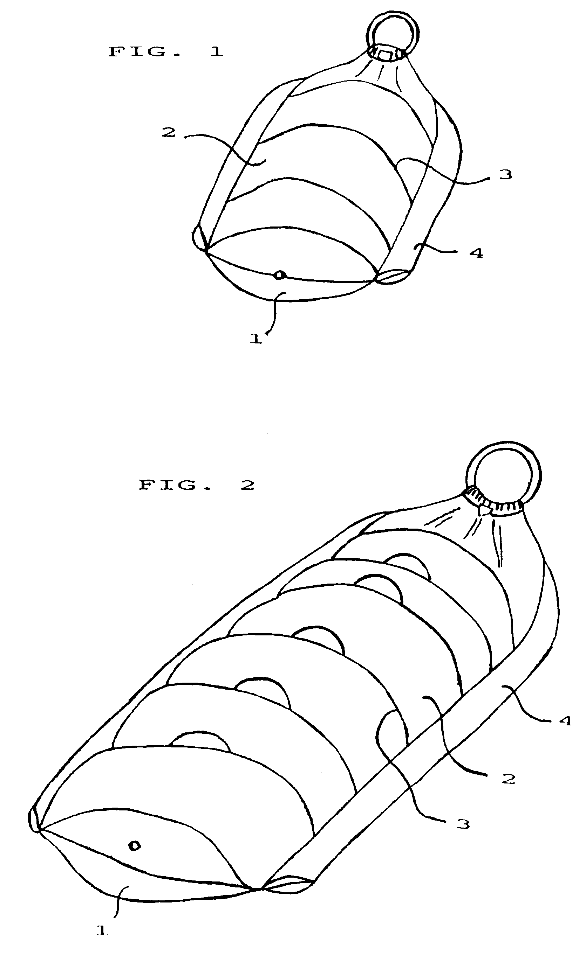

According to the applications shown in figures 1 and 2, the transportation device consists of a cover which is constructed of the bottom part 1 and the top part 2 made of plastic coated fabric material. It has been found advantageous that the bottom part be made of thicker and/or more durable fabric than the top part. The bottom part and the top part have been fastened to each other by their edges in a previously known way. Between them, the granular-like filling material is placed. On both sides of the transportation device in the lengthwise direction feet supports 4 for feet have been made, these supports have advantageously been made of the same fabric as the top and the bottom part and filled with the filling material. On the under surface of the bottom part of the transportation device and on the under surfaces of the supports grooves, furrows and/or abrasions have been formed which help in steering and braking the transportation device, for example by pressing with foot. In the transportation device, dividing walls 3 have been formed, which extend from the bottom part to the top part. Instead of a dividing wall to keep the granular-like filling material in place, the same result can be achieved by connecting the bottom part and the top part together also in the central part of the transportation device. Also, on the front part of the device of transportation, a support 4 has been fastened for holding when sliding downhill or during some other use and for carrying the device.

The invention will not be limited to the described favourable application but variations within the frame of the claims are possible.

## Claims

1. A transportation device which consists of a cover (1, 2) made of an elastic fabric material and filling material placed within it, **characterized** in that the filling material is a granular-like material which at least partially is free to move inside the transportation device and mould to the shape of the user.

2. A transportation device according to claim 1, **characterized** in that the cover of the transportation device consists of a bottom part (1) and a top part (2) which have been fastened to each other by their edges.

3. A transportation device according to claim 2, **characterized** in that the bottom part and the top part have been joined together at least by one dividing wall (3).

4. A transportation device according to one of the claims 1-3, **characterized** in that on both sides of the device of transportation supports (4) for feet have been formed in the lengthwise direction of the transportation device, these supports and the under surface of the bottom part of the device of transportation form the three sliding surfaces.

5. A transportation device according to claim 4, **characterized** in that on the faces of the sliding surfaces grooves, furrows and/or abrasions have been formed for steering and braking the transportation device.

## Patentansprüche

1. Transportvorrichtung bestehend aus einer Abdeckung (1, 2) aus einem elastischen Stoff und darin vorgesehenem Füllmaterial, **dadurch gekennzeichnet**, **dass** das Füllmaterial ein granulatähnliches Material ist, welches innerhalb der Transportvorrichtung wenigstens teilweise frei beweglich und der Form des Anwenders anpassbar ist.

2. Transportvorrichtung nach Anspruch 1, **dadurch gekennzeichnet**, **dass** die Abdeckung der Transportvorrichtung aus einem Bodenteil (1) und einem Oberteil (2) besteht, die an ihren Kanten aneinander befestigt sind.

3. Transportvorrichtung nach Anspruch 2, **dadurch gekennzeichnet**, **dass** das Bodenteil und das Oberteil wenigstens über eine Trennwand (3) miteinander verbunden sind.

4. Transportvorrichtung nach wenigstens einem der Ansprüche 1 - 3, **dadurch gekennzeichnet**, **dass** auf beiden Seiten der Transportvorrichtung Stützen (4) für Füsse in Längsrichtung der Transportvorrichtung angeformt sind, welche Stützen sowie die Unterseite des Bodenteils der Transportvorrichtung drei Gleitflächen bilden.

5. Transportvorrichtung nach Anspruch 4, **dadurch gekennzeichnet**, **dass** auf den Gleitflächen Nuten, Furchen und/oder Abschürfungen zum Steuern und Bremsen der Transportvorrichtung ausgeführt sind.

## Revendications

1. Dispositif de transport constitué d'une enveloppe (1,2) faite d'une matière textile élastique et d'une matière de rembourrement placée dans l'enveloppe, caractérisé en ce que la matière de rembourrement est une matière granulaire qui est au moins partiellement libre de se déplacer à l'intérieur du dispositif de transport et de s'adapter à la forme de l'utilisateur.

2. Dispositif de transport selon la revendication 1, caractérisé en ce que l'enveloppe du dispositif de transport est constituée d'une partie de fond (1) et d'une partie supérieure (2) qui ont été assemblées l'une à l'autre par leurs bords.

3. Dispositif de transport selon la revendication 2, caractérisé en ce que la partie de fond et la partie supérieure ont été réunies au moins par une paroi de division (3).

4. Dispositif de transport selon une des revendications 1 à 3, caractérisé en ce que des supports (4) pour pieds ont été formés sur les deux côtés du dispositif de transport dans le sens de la longueur du dispositif de transport, ces supports et la surface inférieure de la partie de fond du dispositif de transport forment les trois surfaces de glissement.

5. Dispositif de transport selon la revendication 4, caractérisé en ce que des rainures, sillons et/ou abrasifs ont été formés sur les faces des surfaces de glissement pour guider et freiner le dispositif de transport.
